# EUROPEAN PATENT APPLICATION

(11) **EP 1 265 134 A1**
(43) Date of publication of application: **11.12.2002**
(21) Application number: 01410066.3
(22) Date of filing: 08.06.2001
(51) Int. Cl.: G06F 9/445

(54) **A boot process for a computer, a boot ROM or BIOS, and an operating system**

(71) Applicant: Hewlett-Packard Company, A Delaware Corporation, Palo Alto, CA 94304 (US)
(72) Inventor: Combe, Jean-Michel, 38420 Domene (FR); Drif, Dany, 73000 Chambéry (FR)
(74) Representative: Lloyd, Richard Graham

(57) **Abstract**

A boot process for a computer comprising a plurality of boot process steps performed in accordance with a boot process pattern, the pattern being determined by the first task which the computer is to carry out.

## Description

### Description of and Background to Invention

This invention relates to a boot process for a computer, a boot ROM or BIOS, an Operating System, a computer arranged to execute a boot process, a computer having a boot ROM or BIOS, and a computer having an operating system.

In particular, although not exclusively, the invention relates, in broad terms, to a boot process which can be adapted to meet certain specified requirements.

More specifically, the invention relates to an improved boot process which offers advantages over existing "linear" boot processes which are inflexible, slow to execute, and which thus can cause excessive operational delays subsequent to power-up of an associated computer. As will be appreciated, these delays exist in conventional computers and boot processes regardless of the nature of the operation which a user wishes initially to perform.

It is an object of the present invention to provide an improved boot process which overcomes or at least alleviates this and other shortcomings, and to provide a boot ROM or BIOS and an Operating System which enables the improved process to be executed. It is also an object of the present invention to provide a computer arranged to execute such an improved boot process, to provide a computer having such an improved boot ROM or BIOS, and to provide a computer having such an improved Operating System.

### Summary of the Invention

In accordance with a first aspect of the present invention, there is provided a boot process for a computer comprising a plurality of boot process steps performed in accordance with a boot process pattern, the pattern being determined by the first task which the computer is to carry out.

Preferably, the pattern is variable so that the boot process may be tailored in accordance with user-specific requirements.

The first task may conveniently be selected by a user, the selection determining a primary set of process steps, performance of which being necessary for the computer to carry out the first task.

Selection of the first task may also determine a secondary set of process steps which is performed during, or after, the first task is carried out.

The secondary set of process steps may be performed in a background environment.

The first task may be the loading or running of a client application.

In this way, the user may select one of a plurality of available client applications which the user wishes to employ as soon as possible subsequent to power-up of the computer.

From this, it will be appreciated that the computer can become "useful" to the user much sooner after power-up than has hitherto been the case. In brief, this is because conventional boot processes operate in a strict linear manner, in that a pre-set, and invariable number of boot process steps are always performed during the boot process. Use of the present invention, however, enables the number of process steps, the order in which they are carried out, and the delay between each step to be varied, in accordance with user-specific and/or application-specific requirements.

In this way, the computer concerned can be perceived by a user, under some circumstances, to be "instantly" available. This has obvious advantages from a technical viewpoint, in that the computer can be "put to work" more quickly than is currently the case. Similarly, this will be beneficial from a commercial standpoint, as an apparently "instantly available" computer will offer clear advantages over existing machines which, from a user's perspective, can take an inordinate amount of time to attain a "ready to use" state.

The primary set of process steps may be determined by identifying the services, functions and/or data required by the application during use thereof.

Conveniently, the primary set may be determined by identifying the routine libraries associated with the application. Desirably, the primary set may be determined by identifying the dynamic libraries associated with the application. In a Windows (RTM) environment, these may be Dynamic Link Libraries (DLL's).

In this way, the boot process may be adapted in an application-specific manner, in that the boot process pattern is varied so as to provide the selected application with the software stacks required for use thereof.

Preferably, the boot process steps are arranged hierarchically, in that some process steps, other than the first, are operatively associated with at least two other process steps.

Preferably, the hierarchy corresponds to the order in which the steps are performed, a lower order step, during the boot process, being able to identify the or each higher order step in the hierarchy.

Some of the steps may be provided with an attribute, with the value of the attribute conveniently being variable.

Preferably, variation of the value of the attribute effects a variation in the boot process pattern.

Additionally or alternatively, the pattern may be varied automatically so that the boot process may be tailored, without user intervention, in accordance with software use profile data gathered by the computer.

The software use profile data may identify the task performed most frequently following boot-up, such that a subsequent boot-up will be effected in accordance with a boot process pattern which allows the task to be performed shortly after power-up of the computer.

The computer, during use, may thus monitor the tasks performed by it, and, in particular, may monitor and/or record those tasks performed following boot-up. In this way, use profile information can be gathered, which information may be used, in turn, to tailor the boot process in a manner appropriate to the user concerned.

Thus, for example, where the information gathered indicates that the user, subsequent to boot-up of the computer, almost invariably carries out an initial e-mail check, the boot process may be adapted to provide the computer with video/graphics capability, network connectivity and an e-mail client application. Other components of the boot process, such as sound card initialisation, HTTP/Internet connectivity, printer management and data storage capabilities may be executed at a later stage of the boot process.

In accordance with a second aspect of the present invention, there is provided a boot ROM or BIOS arranged to execute a boot process substantially in accordance with the first aspect of the present invention.

In accordance with a third aspect of the present invention, there is provided a computer arranged to execute a boot process substantially in accordance with the first aspect of the present invention.

In accordance with a fourth aspect of the present invention, there is provided a computer having a boot ROM or BIOS substantially in accordance with the second aspect of the present invention.

In accordance with a fifth aspect of the present invention, there is provided an Operating System arranged to execute a boot process substantially in accordance with the first aspect of the present invention.

The Operating System may comprise a variable boot process pattern module, whereby the boot process may be tailored in accordance with user-specific requirements.

In accordance with a sixth aspect of the present invention, there is provided a computer having an Operating System substantially in accordance with the fifth aspect of the present invention.

### Brief Description of the Drawings

The invention, in its various aspects, will now be described in greater detail, but strictly by way of example only, by reference to the accompanying drawings, of which
Figure 1 is a prior art illustration of a conventional PC boot process,
Figure 2 is a schematic illustration of a boot process in accordance with the present invention and
Figure 3 is a schematic illustration of a boot process tree structure in accordance with the present invention.

### Best Mode of the Invention

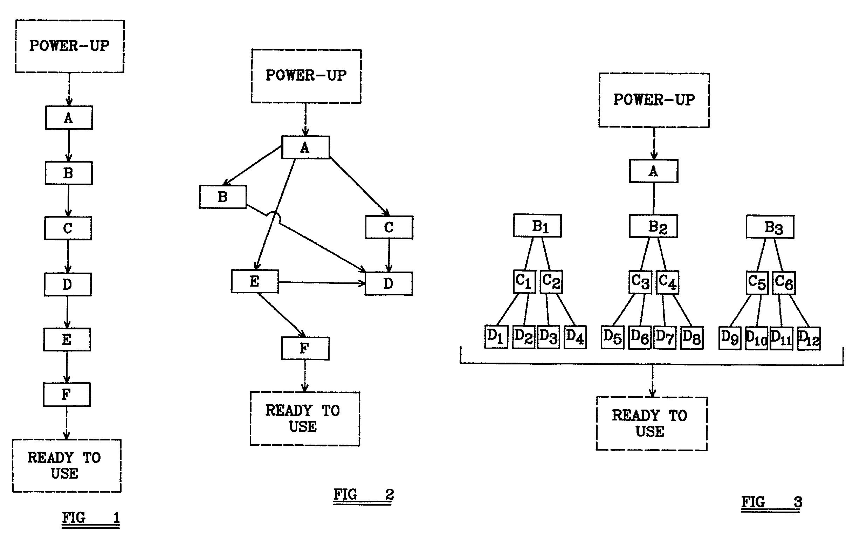

Referring first to Figure 1, this shows, in schematic form, a conventional linear PC boot process comprising a number of steps A, B, C, D, E and F which must be performed, strictly in the order illustrated, in order for the PC concerned to attain a "ready to use" state. As will be appreciated, this arrangement is inherently inflexible, in that each of the steps A to F must be performed in order for a satisfactory boot process to be executed. Thus, omission or incorrect execution of any of the steps results in an incomplete or corrupted boot process which gives rise to operational difficulties (or even inutility) of the computer concerned. Moreover, the requirement that each step be performed causes the boot process to be somewhat lengthy, which can be very inconvenient to the user when rapid use of the computer is desired. In addition, this conventional boot process is "resource-heavy", in that a lot of memory is used as the process is performed.

Figure 2, representative of an embodiment of the present invention, illustrates one way in which these problems can be overcome.

In brief, the boot process of the present invention, whilst conceivably employing - at some stage during the boot process - the same steps A to F, enables the boot process pattern to be determined - and hence varied - in accordance with certain criteria.

As will be appreciated, the term "boot process pattern" encompasses not only the specific process steps concerned, but also the order in which they are performed, and the time periods which exist between the various steps.

In the example shown in Figure 2, it can be seen that the "ready to use" state can be attained simply by performing boot process steps A, E and F, with boot process steps B, C and D not being essential in this regard. Thus, where, for example, process step A initiates the computer's mouse and keyboard capabilities, step E loads the computer's network capability and step F initiates the computer's Internet connectivity (network authentication and command processing/receiving), execution of steps A, E and F can enable the computer to offer the user a web browsing capability without the necessity of first executing process steps B, C and D. These latter steps may, for example, provide the computer with video capabilities, sound card facilities and file storage utility.

It will be appreciated, of course, that process steps B, C and D may, if required, be performed at a later stage, and that performance of these steps may be dependent upon the subsequent tasks which the computer is asked to perform. Thus, in the case of a network capability boot process step, this may be left "dormant" unless and until the computer is asked to perform a network based task, such as, for example, Intranet file sharing or LAN message broadcasting.

In the example shown in Figure 2, therefore, boot process steps A, E and F are considered to constitute a primary set of process steps, with steps B, C and D thus constituting a secondary set which may be performed when, or after, the task first performed by the computer is carried out.

To identify the required components of the primary set of boot process steps, the functions and/or data required by the initial task (such as a client application) are identified. Thus, in the example shown in Figure 2, analysis of the client application would reveal a requirement for mouse/keyboard capabilities, video/graphics display capabilities and an HTML generation/transmission/reception capability, with this "wish list" thus being used to tailor the boot process in an appropriate manner.

More specifically, in a Windows (RTM) environment, analysis of the client application could involve identification of the Dynamic Link Libraries (DLL's) associated with it, which, as will be understood by those well versed in the art, identify the functions and/or data required by the application concerned. Moreover, as such files are identifiable by standard extensions (e.g. .DLL, .EXE, .DRV or .FON) the boot process step requirements of the application concerned can readily be determined. In a Unix environment, such dynamic libraries may be identified by the suffix .LIB.

The boot process steps A to F may be distinguished from each other by allocating each step with one or more attributes, with the attributes indicating, for example, whether the step concerned is mandatory (in that it must be performed during each boot process), whether it is to form part of a primary process step set, whether it is to form part of a secondary process step set (and thus is to be performed in a background environment) and the position which it should occupy during such a background environment secondary set performance. It will be appreciated that some of these attributes may be user-defined.

Similarly, each process step may be identified by the memory location and size of the routine concerned and may comprise, in addition, hierarchical identifiers which indicate which other process steps must be performed before that step can itself be performed.

An example of such identification data is set out below.

| Boot Process Step Identifier | |
|---|---|
| Predecessors list (i.e. Position in Hierarchy) | Step A, Step B, ... |
| Binaries & Files | Location, Size, ... |

| Attributes | |
|---|---|
| System Mandatory Steps | Yes/No |
| First User Needs | Yes/No |
| Load in Background | Yes/No |
| Background Priority | 1/2/... |

Examples of "System Mandatory Steps" could include keyboard and mouse initialisations and video/graphics initialisations, as these boot process steps are likely to be required for many, if not all, tasks and client applications.

In brief, the process step identification method described above constitutes a "tagged" approach to effecting the boot process, in that the task's (or client application's) requirements are used to identify those boot process steps which are needed by the computer to perform the task or to execute the application concerned.

An alternative way in which to identify the required boot process steps is to adopt a "dynamic" approach, wherein less information is initially required in relation to the task or application. Using this dynamic approach, information is extracted from the task or application in substantially the same way as described above, although only "higher hierarchical" information is required. Thus, in the example shown in Figure 2, it will suffice to indicate that boot process step F is required, as the boot process step identifier corresponding to boot process step F contains information which indicates that, in order to perform step F, steps A and E must first be performed. Thus, this dynamic approach operates using a data tree structure, in that knowledge of a higher hierarcical step enables the computer, using the predecessors list in the various boot process step identifiers, to identify any previous boot process steps which also need to be performed.

This is illustrated in schematic form by Figure 3, which shows a plurality of "higher hierarchical" boot process steps D₁ to D₁₂, a plurality of slightly lower hierarchical boot process steps C₁ to C₆, three still lower hierarchical boot process steps B₁, B₂ and B₃ and an initial (lowest level) hierarchical process step A, which latter step is performed automatically subsequent to power-up of the computer.

As will be appreciated, knowledge that a given task or application requires performance of (for example) boot process step D₇ leads, using the tree structure, to the fact that prior boot process steps A, B₂ and C₄ also need to be performed.

As an alternative to the user-specified variation of the boot process step pattern, automatic pattern variation is also envisaged. To this end, the computer, during use, may gather software use profile data, which provides an indication of what tasks and applications are carried out or run by a user over a period of time.

This software use profile data may be gathered using the computer's Operating System which, such as in the case of Microsoft's WINDOWS (RTM) Operating System, may be provided with such an information gathering module. On the basis of the thus gathered use profile data, the Operating System is able to determine which tasks and applications are performed/executed most often subsequent to boot-up of the computer. This, as will be appreciated, will suggest that the task/application most commonly used at this time is the task/application which the user is likely to want to employ soon after a subsequent power-up of the computer. Thus, using this automatically gathered information, the boot process step pattern may be varied by the Operating System so that a subsequent boot-up allows the task/application concerned to be performed/executed sooner than would otherwise be the case.

This, in conjunction with the various other facets of the invention described above, allows a computer to attain a "ready for use" state much quicker than has hitherto been the case, by obviating the need to execute each and every boot process step in an inflexible linear manner. This, in turn, gives the perception of a rapidly available, "instant on", computer which offers clear technical, commercial and operational advantages.

It will be appreciated to those well versed in the relevant art that implementation of the process hereinbefore described may be effected, in a computer environment, in a number of ways. Historically, boot processes have been controlled primarily under the guidance of a boot ROM or the computer's BIOS. With this in mind, it will be understood that the variable boot process provided by the present invention can be "recorded" using either of these two media. However, evolution of boot processes has led to a greater importance being given to the computer's Operating System, with more and more of the boot process control thus being exerted thereby.

The applicants, being aware that boot processes will continue to evolve in this way, thus envisage that the boot process of the present invention could in fact be implemented in a variety of different ways, and the foregoing description, and the following claims, should therefore be interpreted in this light.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A boot process for a computer comprising a plurality of boot process steps performed in accordance with a boot process pattern, the pattern being determined by the first task which the computer is to carry out.

2. A boot process according to Claim 1 wherein the pattern is variable so that the boot process may be tailored in accordance with user-specific requirements.

3. A boot process according to Claim 1 or Claim 2 wherein the first task is selected by a user, the selection determining a primary set of process steps, performance of which being necessary for the computer to carry out the first task.

4. A boot process according to Claim 3 wherein a secondary set of process steps is performed during, or after, the first task is carried out.

5. A boot process according to Claim 4 wherein the secondary set is performed in a background environment.

6. A boot process according to any one of the preceding claims wherein the first task is the loading or running of a client application.

7. A boot process according to Claim 6, wherein the primary set is determined by identifying the services, functions and/or data required by the application during use thereof.

8. A boot process according to Claim 6 or claim 7 wherein the primary set is determined by identifying the routine libraries associated with the application.

9. A boot process according to Claim 6, Claim 7 or Claim 8 wherein the primary set is determined by identifying the dynamic libraries associated with the application.

10. A boot process according to any one of the preceding claims wherein the boot process steps are arranged hierarchically, in that some process steps, other than the first, are operatively associated with at least two other process steps.

11. A boot process according to Claim 10 wherein the hierarchy corresponds to the order in which the steps are performed, a lower order step, during the boot process, being able to identify the or each higher order step in the hierarchy.

12. A boot process according to any one of the preceding claims wherein some of the steps are provided with an attribute, the value of the attribute being variable.

13. A boot process according to Claim 12 wherein variation of the value of the attribute effects a variation in the boot process pattern.

14. A boot process according to any one of the preceding claims wherein the pattern is varied automatically so that the boot process may be tailored, without user intervention, in accordance with software use profile data gathered by the computer.

15. A boot process according to Claim 14 wherein the software use profile data identifies the task performed most frequently following boot-up, so that a subsequent boot-up will be effected in accordance with a boot process pattern which allows the task to be performed shortly after power-up of the computer.

16. A boot ROM or BIOS arranged to execute a boot process substantially in accordance with any one of the preceding claims.

17. A computer arranged to execute a boot process substantially in accordance with any one of Claims 1 to 15.

18. A computer having a boot ROM or BIOS substantially in accordance with Claim 16.

19. An Operating System arranged to execute a boot process substantially in accordance with any one of Claims 1 to 15.

20. An Operating System according to Claim 14 comprising a variable boot process pattern module, whereby the boot process may be tailored in accordance with user-specific requirements.

21. A computer having an Operating System substantially in accordance with Claim 19 or Claim 20.
